# EUROPEAN PATENT APPLICATION

(11) **EP 4 764 243 A1**
(43) Date of publication of application: **24.06.2026**
(21) Application number: 24222196.8
(22) Date of filing: 20.12.2024
(51) Int. Cl.: F16D 1/076, F16D 1/108, F16H 57/00, F16D 1/10

(54) **A SHAFT ASSEMBLY FOR A GEARBOX OF A VEHICLE**

(71) Applicant: VOLVO TRUCK CORPORATION, 405 08 Göteborg (SE)
(72) Inventor: LANDESTORP, Josef, 44339 LERUM (SE); HEDMAN, Anders, 442 67 MARSTRAND (SE); NORBERG, Sven, 422 47 HISINGS BACKA (SE); ELFRIDSSON, Jon, 42140 VÄSTRA FRÖLUNDA (SE)
(74) Representative: Lavoix

(57) **Abstract**

A shaft assembly (17) including a shaft (19), a gear assembly (49), comprising a first gearwheel (51) and a second gearwheel (63) locked in rotation relative to each other. The shaft assembly includes a first cylindrical joint, comprising a first cylindrical section (25), integral to the shaft, and a first central opening (53), integral to the first gearwheel, the first gearwheel being mounted on the shaft via the first central opening, a second cylindrical joint, comprising a second cylindrical section (31), integral to the shaft, and a second central opening (65), the second gearwheel being mounted on the shaft via the second central opening, and a spline joint (37), comprising a first part (35), integral to the shaft, and a second part (50), integral to the gear assembly, engaged with the first part so that the first gearwheel and the second gearwheel are locked in rotation with the shaft.

## Description

### TECHNICAL FIELD

The disclosure relates generally to the enhancement of torque distribution in a gearbox. In particular aspects, the disclosure relates to a shaft assembly for a gearbox of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In the case of electric vehicle, it is known to use a gearbox at the end of the transmission system to transfer torque from the electric motor to the wheels. In this case, the torque transferred to the gearbox is high and it is transferred by several gearwheels to the shaft output of the gearbox. Thus, the assembly of the shaft with the gearwheels has to be robust. It is known to use one spline joint and one cylindrical guiding for each gearwheel to secure in rotation the gearwheels to the shaft and obtain a robust assembly. Nevertheless, the use of several spline joints is expensive and tends to generate coaxiality deviations between the splines and the cylindrical guidings. In particular, it may lead to uneven peripheral load distribution in the spline joints, causing higher stress. Hence the splines often need to be over-dimensioned. The invention aims at providing a shaft assembly which is less expensive while enabling a more easily achievable coaxiality.

### SUMMARY

According to a first aspect of the disclosure, a shaft assembly for a gearbox, the shaft assembly including:
- a shaft, comprising a front end and a back end coaxial to a rotation axis;
- a gear assembly, comprising a first gearwheel and a second gearwheel secured to each other so as to be locked in rotation relative to each other around the rotation axis;
- a first cylindrical joint, comprising:
   ∘ a first cylindrical section, integral to the shaft and coaxial to the rotation axis, and
   ∘ a first central opening, integral to the first gearwheel, the first gearwheel being mounted on the shaft coaxially with the rotation axis via the first central opening;
- a second cylindrical joint, comprising:
   ∘ a second cylindrical section, integral to the shaft and coaxial to the rotation axis, and
   ∘ a second central opening, the second gearwheel being mounted on the shaft coaxially with the rotation axis via the second central opening, wherein the first gearwheel is positioned between the front end and the second gearwheel; and
- a spline joint, comprising:
   ∘ a first part, integral to the shaft and coaxial to the rotation axis, and
   ∘ a second part, integral to the gear assembly, engaged with the first part so that both the first gearwheel and the second gearwheel of the gear assembly are locked in rotation with the shaft around the rotation axis via the spline joint.

The first aspect of the disclosure may seek to use only one spline joint and two cylindrical joints. A technical benefit may include that implementing a single spline joint shared by the first and second gearwheels may reduce coaxiality issues, compared to the prior art where more than one spline joint was implemented. The reduced number of joints also facilitates assembly and may be less expensive.

Optionally in some examples, including in at least one preferred example, the gear assembly comprises a fastener, extending parallel to the rotation axis through the first gearwheel and the second gearwheel, wherein the securing of the first gearwheel and the second gearwheel to each other is ensured by the fastener. In some examples, the fastener includes a screw with a screw head and includes a nut, wherein the screw is screwed into the nut, wherein the first gearwheel and the second gearwheel are interposed between the screw head and the nut parallel to the rotation axis for ensuring said securing. In some examples, the fastener includes a screw, wherein one of the first gearwheel and the second gearwheel includes an internal thread, wherein the screw is screwed into the internal thread for ensuring said securing. A technical benefit may include a reliable securing in rotation of the gearwheels to each other to ensure torque transmission between the gearwheels. A technical benefit may include an easier manufacturing of the shaft assembly.

Optionally in some examples, including in at least one preferred example, the shaft comprises an inner lubricant duct, opening inside the gear assembly for lubricating the spline j oint. A technical benefit may include lubricating the spline joint to reduce the wear that could be caused by uneven deformations of the parts of the shaft assembly in use, for example due to temperature variations and mechanical stress.

Optionally in some examples, including in at least one preferred example, the gear assembly comprises peripheral teeth configured to enable a measurement of a rotation speed of the gear assembly around the rotation axis. A technical benefit may include implementing specific teeth to measure the speed of the gear assembly, in addition to teeth of the gearwheels. As the peripheral teeth are not used to transfer torque, their shape and number may easily be adapted to the speed sensor to improve the speed measurement.

Optionally in some examples, including in at least one preferred example, the shaft assembly comprises an output gearwheel fixedly mounted at the front end of the shaft. The first gearwheel comprises a contact surface oriented towards the second gearwheel, wherein the first gearwheel and the second gearwheel are in abutment relative to each other along the rotation axis. The spline joint is arranged between the back end and the contact surface. A technical benefit may include an easier manufacturing of the shaft assembly, since the shape of the gearwheels is kept relatively simple, in particular devoid of axial protrusions.

Optionally in some examples, including in at least one preferred example, the shaft assembly comprises an output gearwheel fixedly mounted at the front end of the shaft. The first gearwheel comprises a contact surface oriented towards the second gearwheel, wherein the first gearwheel and the second gearwheel are in abutment relative to each other along the rotation axis. The spline joint is arranged between the front end and the contact surface. A technical benefit may include improving the torsional stress distribution in the gearwheel and limiting the torsional stress concentration in the spline joint.

Optionally in some examples, including in at least one preferred example, a torsional stiffness of the second part of the spline joint is comprised between 0.8 and 1.2 times the torsional stiffness of the first part of the spline j oint. A technical benefit may include improving the torque transmission in the spline j oint. Indeed, if the first part and the second part have a torsional stiffness that would be too different, a part of the torque would deform the part with the lowest torsional stiffness instead of evenly transmitting the torque through the spline joint.

Optionally in some examples, including in at least one preferred example, a distance between the second central opening and the spline joint, measured parallel to the rotation axis, is inferior to a length of the spline joint, measured parallel to the rotation axis and preferably inferior to half of the length of the spline joint. A technical benefit may include reducing the stress concentration in the first gearwheel generated by sliding motion during the torque transmission.

Optionally in some examples, including in at least one preferred example, the second part of the spline joint is integral with one of the first gearwheel and the second gearwheel. A technical benefit may include reducing the number of part references and assembly costs of the gear assembly.

Optionally in some examples, including in at least one preferred example, the gear assembly comprises a friction enhancing shim interposed between the second gearwheel and the first gearwheel for ensuring the locking in rotation of the first gearwheel and the second gearwheel relative to each other. A technical benefit may include improving the locking in rotation of the gearwheels relative to each other.

Optionally in some examples, including in at least one preferred example, the gear assembly comprises an added torque-transferring part, interposed between the first gearwheel and the second gearwheel parallel to the rotation axis and secured to the first gearwheel and the second gearwheel so as to be locked in rotation with the first gearwheel and the second gearwheel around the rotation axis, the second part of the spline joint being integral to the torque-transferring part. In some examples, the gear assembly comprises friction enhancing shims interposed between the second gearwheel and the torque-transferring part and/or between the torque-transferring part and the first gearwheel for ensuring the locking in rotation of the first gearwheel, the second gearwheel and the torque-transferring part relative to each other. A technical benefit may include improving the stress repartition in the gear assembly by adding an element dedicated to the torque transmission to the shaft. Thus, the shear stress generated by the torque transmission in the spline joint does not need to be transmitted to one of the gearwheels by the other gearwheel. Instead, each gearwheel is protected from the mechanical stress applied to the other gearwheel. Besides, the addition of the torque-transferring part enables the use of thinner gearwheels so that the shaft assembly is easier to manufacture, in particular the gearwheels.

Optionally in some examples, including in at least one preferred example, the gear assembly comprises:
- a first radial guide, for centring the torque-transferring part relatively to the first gearwheel, with a radial play between the first radial guide and the torque-transferring part, and
- a second radial guide, for centring the second gearwheel relatively to the torque-transferring part with a radial play between the second radial guide and the second gearwheel.

A technical benefit may include facilitating the mounting of the shaft assembly. Indeed, thanks to the radial guides, the gear assembly 49 can be assembled independently of the other elements of the shaft assembly, the element of the gear assembly being centered to each other via the radial guides when not yet mounted onto the shaft. Therefore, the gear assembly can be mounted as a single part on the shaft.

Optionally in some examples, including in at least one preferred example, the shaft comprises a stop, arranged at the front end and oriented towards the back end. The shaft comprises an external thread at the back end. The shaft assembly comprises an abutment nut, screwed onto the external thread. The gear assembly is interposed between the stop and the abutment nut, parallel to the rotation axis. In some examples, the shaft assembly comprises a front bearing, configured to support a rotation of the shaft assembly around the rotation axis. The front bearing is interposed between the stop and the first gearwheel, parallel to the rotation axis. The shaft assembly comprises a back bearing, configured to support the rotation of the shaft assembly around the rotation axis. The back bearing is interposed between the second gearwheel and the abutment nut, parallel to the rotation axis. A technical benefit may include enabling precise and reliable axial positioning of the gearwheels on the shaft, while facilitating manufacturing of the shaft assembly, in that the gear assembly and the bearings can be successively fitted onto the shaft.

According to a second aspect of the disclosure, a gearbox, comprising the shaft assembly as defined above and a housing, wherein the shaft assembly is rotatable around the rotation axis in relation to the housing. The second aspect of the disclosure may seek to use only one spline joint and two cylindrical joints. A technical benefit may include that implementing a single spline joint shared by the first and second gearwheels may reduce coaxiality issues, compared to the prior art where more than one spline joint was implemented. The reduced number of joints also facilitates assembly and may be less expensive.

According to a third aspect of the disclosure, a vehicle comprising a gearbox as defined above. The third aspect of the disclosure may seek to use only one spline joint and two cylindrical joints. A technical benefit may include that implementing a single spline joint shared by the first and second gearwheels may reduce coaxiality issues, compared to the prior art where more than one spline joint was implemented. The reduced number of joints also facilitates assembly and may be less expensive.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a schematic view of a vehicle according to a first embodiment of the invention.
**FIG. 2** is a cross-section of a shaft assembly of the vehicle of the figure 1.
**FIG. 3** is a view similar to the view of the figure 2, the shaft assembly being according to a second embodiment of the invention.
**FIG. 4** is a view similar to the view of the figure 2, the shaft assembly being according to a third embodiment of the invention.
**FIG. 5** is a view similar to the view of the figure 2, the shaft assembly being according to a fourth embodiment of the invention.
**FIG. 6** is a view similar to the view of the figure 2, the shaft assembly being according to a fifth embodiment of the invention.

### DETAILED DESCRIPTION

The detailed description set forth below provides information and examples of the disclosed technology with sufficient detail to enable those skilled in the art to practice the disclosure.

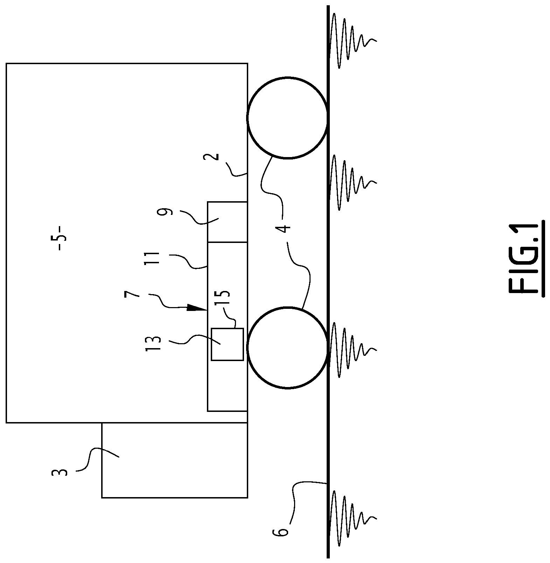

Figure 1 depicts a vehicle 1, comprising a frame 2, a driving cabin 3, a load compartment 5 and a powertrain 7 according to an embodiment of the invention.

The driving cabin 3 is supported by the frame 2 and positioned at the front of the vehicle 1. The vehicle 1 is drivable by a driver. The driver inside the driving cabin 3 controls the vehicle 1. Wheels 4 are mounted on the frame 2 and are configured to rotate to enable the movement of the vehicle 1 on a road 6.

The powertrain 7 comprises an electric motor 9, a transmission 11 and a gearbox 13. The transmission 11 links the electric motor 9 to the gearbox so that the electric motor 9 drives in rotation an input of the gearbox 13. The gearbox 13 comprises an output configured to drive the wheels 4 in rotation. Thus, the wheels 4 are driven in rotation by the electric motor 9 via the transmission and the gearbox 13. In this example, only two wheels 4 of the vehicle 1 are driven by the gearbox 13. In a variant, all the wheels 4 are driven by the gearbox 13.

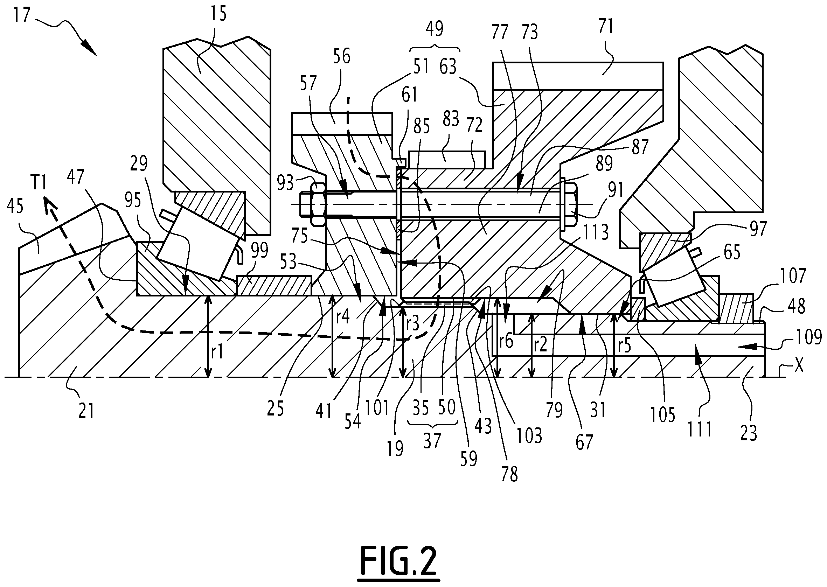

The gearbox 13 comprises a housing 15 and a shaft assembly 17 configured to rotate around a rotation axis X in relation to the housing 15, as shown on figure 2.

The shaft assembly 17 comprises a shaft 19. The shaft 19 extends from a front end 21 to a back end 23 thereof. The front end 21 and the back end 23 are coaxial to the rotation axis X. The shaft 19 defines an external surface 29 homogeneous in rotation around the axis X.

The shaft 19 comprises a first cylindrical section 25. The first cylindrical section 25 is coaxial to the rotation axis X. The first cylindrical section 25 defines a first radius r1 measured perpendicularly to the rotation axis X between the rotation axis X and the external surface 29 of the shaft 19.

The shaft 19 also comprises a second cylindrical section 31. The second cylindrical section 31 is coaxial to the rotation axis X. The second cylindrical section 31 defines a second radius r2 measured perpendicularly to the rotation axis X between the rotation axis X and the external surface 29 of the shaft 19. The second radius r2 is inferior to the first radius r1.

The second cylindrical section 31 is positioned, parallel to the rotation axis X, between the first cylindrical section 25 and the back end 23.

The shaft 19 comprises a first part 35 of a spline joint 37, the first part 35 being coaxial to the rotation axis. The first part 35 is arranged, parallel to the rotation axis X, between the first cylindrical section 25 and the second cylindrical section 21.

In this example, the first part 35 defines a third radius r3 measured perpendicularly to the rotation axis X between the rotation axis X and the external surface 29 of the shaft 19. The third radius r3 is inferior to the first radius r1 and superior the second radius r2. More precisely, the shaft comprises a first shoulder 41 between the first cylindrical section 25 and the first part 35 and a second shoulder 43 between the first part 35 and the second cylindrical section 31. The first shoulder 41, respectively the second shoulder 43, enables the diameter reduction between the first radius r1, respectively the third radius r3, and the third radius r3, respectively the second radius r2.

Advantageously, the shaft 19 comprises an output gearwheel 45. The output gearwheel 45 is fixedly mounted at the front end 21 coaxially to the rotation axis X. In this example, the output gearwheel 45 is integral to the front end 21.

Advantageously, the front part 21 comprises a stop 47. The stop 47 extends perpendicular to the rotation axis X, from the external surface 29 and is directed to the back end 23. In this example, the stop 47 is formed by the output gearwheel 45.

Advantageously, the back end comprises an external thread 48 managed on the external surface 29.

The shaft assembly 17 comprises a gear assembly 49 configured to be driven by other elements, not shown, of the gearbox 13. The gear assembly 49 comprises a second part 50 of the spline joint 37 and is mounted on the shaft 19, coaxially to the rotation axis X. When the gear assembly 49 is mounted on the shaft 19, the second part 50 is engaged with the first part 35 so that the gear assembly 49 is locked in rotation with the shaft 19 around the rotation axis X via the spline joint 37.

The gear assembly 49 comprises a first gearwheel 51. The first gearwheel 51 comprises a first central opening 53 delimited by a first inside surface 54. The first central opening 53 is circular and, when the gear assembly 49 is mounted on the shaft 19, centered on the rotation axis X. The first central opening 53 defines a fourth radius r4, measured perpendicularly to the rotation axis X between the rotation axis X and the inside surface 54. The fourth radius r4 is superior or equal to the first radius r1 according to the assembly clearance. In this example, the first radius r1 is slightly smaller than fourth radius r4 in order to facilitate assembly of the first gearwheel 51 on the shaft 19.

The first gearwheel 51 comprises first teeth 56. The first teeth 56 are positioned on the first gearwheel 51 to the opposite of the first central opening 53. The first teeth 56 are configured to be driven by a first other element of the other elements of the gearbox 13.

The first gearwheel 51 defines a first bore 57. The first bore 57 crosses through the first gearwheel 51 parallel to the rotation axis X.

The first gearwheel 51 comprises a contact surface 59. The contact surface 59 is perpendicular to the rotation axis X and is oriented toward the back end 23. In the example, the contact surface 59 delimits an extremity of the first central opening 53.

The first gearwheel 51 comprises a first radial guide 61. The first radial guide 61 extends parallel to the rotation axis X, from the contact surface 59 towards the back end 23.

The gear assembly 49 comprises a second gearwheel 63. The second gearwheel 63 comprises a second central opening 65 delimited by a second inside surface 67. The second central opening 65 is circular and, when the gear assembly 49 is mounted on the shaft 19, centered on the rotation axis X. The second central opening 65 defines a fifth radius r5, measured perpendicularly to the rotation axis X between the rotation axis X and the inside surface 67. The fifth radius r5 is superior or equal to the second radius r2 according to the assembly clearance.

The second gearwheel 63 comprises second teeth 71. The second teeth 71 are positioned on the second gearwheel 63 to the opposite of the second central opening 65. The second teeth 71 are configured to be driven by a second other element of the other elements of the gearbox 13.

The second gearwheel 63 comprises a hub 77. The hub 77 extends between the second central opening 65 and the second teeth 71. The hub 77 extends towards the front end 21 when the gear assembly 49 is mounted on the shaft 19. The hub is delimited by a hub surface 78. The hub 77 delimits an opening 79 defining a sixth radius r6 measured perpendicularly to the rotation axis X between the rotation axis X and the hub surface 78. The sixth radius r6 is superior to the fifth radius r5.

The hub 77 comprises a second contact surface 75. The second contact surface 75 is parallel to the contact surface 59, when the gear assembly 49 is mounted on the shaft 19, and is oriented toward the front end 21.

The second gearwheel 63 defines a second bore 73. The second bore 73 is formed through the second gearwheel 63 parallel to the rotation axis X. When the gear assembly 49 is mounted on the shaft 19, the first bore 57 and the second bore 73 are coaxial.

Advantageously, the second gearwheel 63 comprises peripheral teeth 83. More precisely, the peripheral teeth 83 are positioned on the hub 77 to the opposite of the opening 79. The peripheral teeth 83 are configured to be associated to a speed sensor, not shown, of the gearbox 13 to measure a rotation speed of the shaft 19 around the rotation axis X. The peripheral teeth 83 are only used for measuring the rotation speed of the shaft 19. Thus, a shape and a number of the peripheral teeth 83 are optimized to the speed sensor used in the gearbox 13.

Advantageously the second part 50 of the spline joint 37 is integral to the second gearwheel 63. More precisely, the second gearwheel 63 is integral to the hub 77.

Advantageously, the gear assembly 49 comprises a friction enhancing shim 85. The friction enhancing shim 85 is configured to be interposed between the second gearwheel 51 and the first gearwheel 63. More precisely, the friction enhancing shim 85 is configured to be interposed between the contact surface 59 and the second contact surface 75.

Advantageously, the gear assembly 49 comprises a fastener 87, extending parallel to the rotation axis X. The fastener 87 includes a screw 89 with a screw head 91 and includes a nut 93. The fastener 87 is configured to lock in rotation the second gearwheel 63 relative to the first gearwheel 51 around the rotation axis X.

When the gear assembly 49 is assembled, the contact surface 59 and the second contact surface 75 are oriented one towards the other. The second gearwheel 63 is centered according to the first gearwheel 51. More precisely, the first radial guide 61 positions the hub 77 relative to the first gearwheel 51. In other terms, first radial guide 61 controls the radial position according to the rotation axis X of the second gearwheel 63. The friction enhancing shim 85 is interposed between the contact surface 59 and the second contact surface 75 so that the first gearwheel 51 and the second gearwheel 63 are in abutment relative to each other along the rotation axis X, the first bore 57 and the second bore 73 being coaxial. The screw 89 crosses through the first bore 57 and the second bore 73 and is screwed in to the nut 93, the first gearwheel 51 and the second gearwheel 63 being interposed between the screw head 91 and the nut 93 parallel to the rotation axis X. The first gearwheel 51 and the second gearwheel 63 are locked in relation to each other around the rotation axis X by the fastener 89. Thus, the gear assembly 49 is assembled independently of the other elements of the shaft assembly 17 and is mounted as a single part on the shaft 19.

When the shaft assembly 17 is assembled, the gear assembly 49 is mounted on the shaft 19. The screw 89 is not fully screwed in the nut 93 to enable a relative movement between the first gearwheel 51 and the second gearwheel 63 so that the positions of the first gearwheel 51 and the second gearwheel 63 are adapted to the shaft 19. More precisely, the first central opening 53 is mounted on the first cylindrical section 25 and the second central opening 65 is mounted on the second cylindrical section 31. Thus, the first central opening 53 and first cylindrical section 25 form a first cylindrical joint and the second central opening 65 and second cylindrical section 31 form a second cylindrical joint so that the first gearwheel 51 and the second gearwheel 63 are coaxial to the rotation axis X. Thus, once the gear assembly 49 is mounted on the shaft 19, the second gearwheel 63 is centered to the first gearwheel 51 with a radial play between the first radial guide 61 and the second gearwheel 63. However, the coaxiality of the gearwheels 51 and 63 is not ensured by the radial guides but by the cylindrical joints, thanks to the radial play at the radial guides, while the cylindrical joints are more tightly adjusted.

Then, the screwing of the screw 89 in the nut 93 increases the pressure of the contact surface 57 and the second contact surface 75 against the friction enhancing shim 85 so that the locking of the first gearwheel 51 relative to the second gearwheel 63 around the rotation axis X is improved. Thus, mechanical efforts applied on the first gearwheel 51 is transmitted entirely to the second gearwheel 63.

Advantageously, the shaft assembly 17 comprises a front bearing 95 and a back bearing 97 configured to be mounted on the shaft 19 and enable a rotation of the shaft assembly 17 around the rotation axis X relative to the housing 15.

When the shaft assembly 17 is assembled, the front bearing 95 is mounted on the shaft 19 from the back end 23 to the front end 21. More precisely, the front bearing 95 is mounted on the first cylindrical section 25 and is in abutment against the stop 47.

Once the gear assembly 49 is mounted on the shaft 19, the gear assembly 49 is locked in rotation with the shaft 19 around the rotation axis X via the spline joint 37. In other words, both the first gearwheel 51 and the second gearwheel 63 are locked in rotation with the shaft 19 around the rotation axis X via the spline joint 37. The spline joint 37 is arranged between the back end 23 and the contact surface 59. It is considered that the spline joint 37 is arranged between the back end 23 and the contact surface 59 when a middle of the spline joint 37, comprised between a front end 101 of the spline joint 37 oriented towards the front end 21 of the shaft 19 and a back end 103 of the spline joint 37 oriented towards the back end 23 of the shaft 19, is positioned between the back end 23 and the contact surface 59. In this example, the front end 101 of the spline joint 37 is positioned between the back end 23 and the contact surface 59 so that the entire spline joint 37 is positioned between the back end 23 and the contact surface 59.

The shaft assembly 17 comprises a front spacer 99 interposed between the first gearwheel 51 and the front bearing 95. Thus, once the gear assembly 49 is mounted on the shaft 19, the first bearing 95 is interposed between the first gearwheel 51 and the stop 47, the front bearing 95 being in abutment relative to the stop 47 and the first gearwheel 51 being in abutment in relative to the front bearing 95 via the front spacer 99. The front spacer 99 enables positioning the gear assembly 49 relative to the shaft 19 along the rotation axis X.

Once the gear assembly 49 is mounted on the shaft 19, a back spacer 105 is mounted on the shaft 19 against the second gearwheel 63, then the back bearing 97 is mounted on the shaft 19 and an abutment nut 107 is screwed on the external thread 48. More precisely, the back bearing 97 is interposed between the second gearwheel 63 and the abutment nut 107, the back bearing 97 being in abutment relative to the abutment nut 107 and the second gearwheel being in abutment relative to the back bearing 97 via the back spacer 105. In other terms, the second gearwheel 63 is in abutment relative to the abutment nut 107.

Once the shaft assembly 17 is assembled and implemented in the gearbox 13, torque load transmitted to the first gearwheel 51 and the second gearwheel 63 is transmitted to the shaft 19 via the spline line 37. For instance, a torque load T1 applied on the first gearwheel 51 is transmitted to the second gearwheel 63 through the friction enhancing shim 85 and then transmitted to the shaft 19 through the spline joint 37. To optimize the transmission of torque load T1, the shaft 19 comprises an inner lubricant duct 109. The inner lubricant duct 109 comprises an axial duct 111, parallel to the rotation axis X and crossing the shaft 19 from the back end 23, and a radial duct 113 extending from the axial duct 111 perpendicularly to the rotation axis X and opening inside the gear assembly 49 close to the spline joint 37. The inner lubricant duct 109 is configured to carry lubricant to the spline joint 37 to reduce wear from vibrations and/or elastic deformation caused by load changes. In a variant, not shown, the axial duct 111 is centered on the rotation axis X.

Thanks to the invention, only one spline line is used to transmit torque load from two different gearwheels to the shaft 19. The invention enables a coaxiality of the two gearwheels relatively to the shaft with only two cylindrical guides. Thus, the invention is cheap and easy to manufacture.

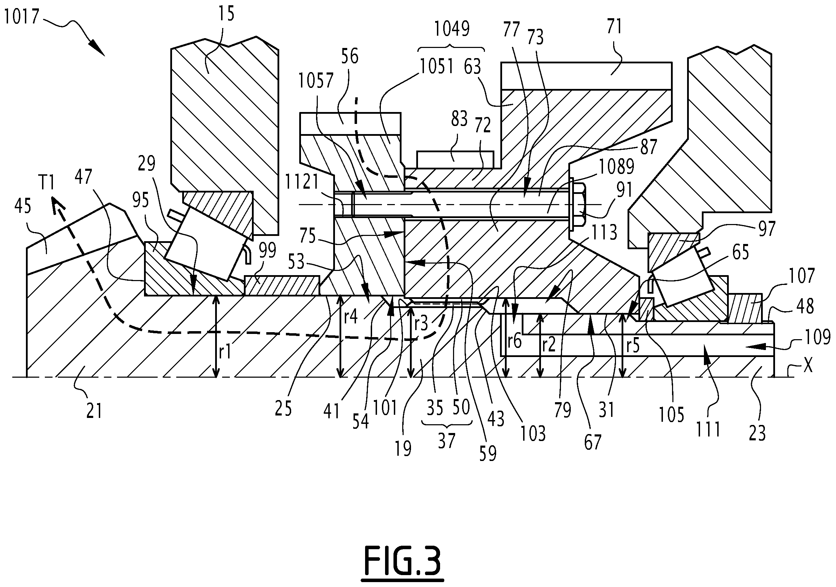

Figure 3 illustrates a shaft assembly 1017 according to a second embodiment of the invention, the shaft assembly 1017 being identical to the shaft assembly 17 of the first embodiment except for the features described below. The reference signs for the shaft assembly 1017 correspond to those of the shaft assembly 17 when the referenced element is unchanged. The reference signs are increased by 1000 when they designate similar but modified elements in the shaft assembly 1017. If a reference is mentioned in the remainder of the description without being shown on figure 3, or shown on figure 3 without being mentioned in the description, it relates to the element bearing the same reference in the first embodiment.

In the embodiment of figure 3, the first gearwheel 1051 includes an internal thread 1121 in the first bore 1057. The screw 1089 is screwed in the internal thread 1121 and no more nut is needed. Thus, the number of pieces of the gear assembly 1049 is reduced.

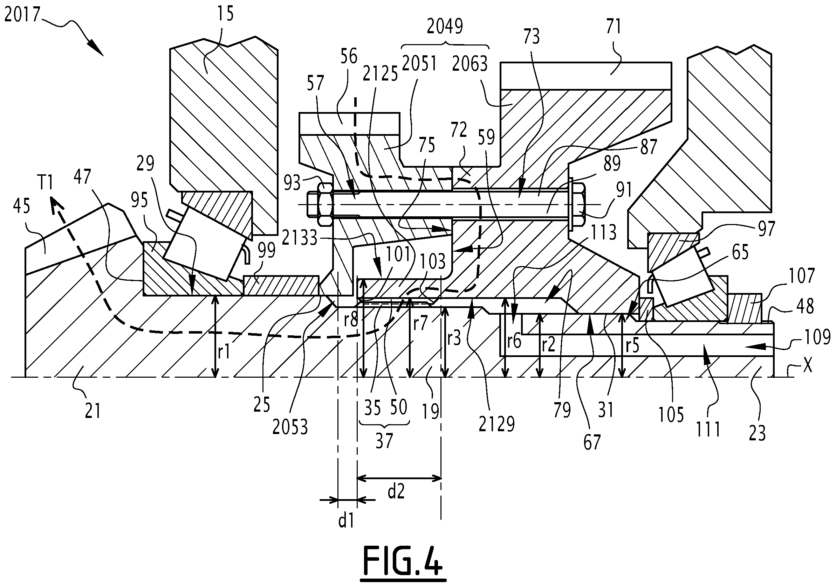

Figure 4 illustrates a shaft assembly 2017 according to a third embodiment of the invention, the shaft assembly 2017 being identical to the shaft assembly 17 of the first embodiment except for the features described below. The reference signs for the shaft assembly 2017 correspond to those of the shaft assembly 17 when the referenced element is unchanged. The reference signs are increased by 2000 when they designate similar but modified elements in the shaft assembly 2017. If a reference is mentioned in the remainder of the description without being shown on figure 4, or shown on figure 4 without being mentioned in the description, it relates to the element bearing the same reference in the first embodiment.

In the embodiment of figure 4, the second gearwheel 2063 comprises an annular support 2125. The annular support 2125 extends parallel to the rotation axis X from the second contact surface 75 in the direction of the front end 21. The annular support 2125 defined a minimal radius r7 measured perpendicularly to the rotation axis X between the rotation axis X and an inner surface 2129 of the annular support 2125 and a maximal radius r8 measured perpendicularly to the rotation axis X between the rotation axis X and an outer surface 2133 of the annular support 2125.

The second part 50 of the spline joint 37 is integral to the annular support 2125. Thus, the spline joint 37 is arranged between the front end 21 and the contact surface 59. More precisely, the back end 103 of the spline joint 37 is positioned between the front end 21 and the contact surface 59. Thus, the torque load T1 in the splines joint 37 is even more distributed in axial direction relative to the spline joint 37. More precisely, there is no turning of the torque path over the splines joint 37. The distribution of the torque load T1 is improved.

Advantageously, the dimensions of the support 2125 are calculated so that a torsional stiffness of the support 2125 integrating the second part 50 of the spline joint 37 is comprised between 0.8 and 1.2 times a torsional stiffness of a part of the shaft 19 integrating the first part 35. Preferably, the torsional stiffness of the support 2125 integrating the second part 50 is equal to the torsional stiffness of the part of the shaft 19 integrating the first part 35 so that the distribution of the torque load through the spline joint 37 is improved. The torsional stiffness is calculated as the polar area moment of inertia. In other terms, the torsional stiffness of the support 2125 integrating the first part 35 is equal to (πx2xr3⁴)/32 and the torsional stiffness of the part of the shaft 19 integrating second part 50 is equal to (πx2(r8⁴-r7⁴)/32.

In this embodiment, the first central opening 2053 is reduced parallel to the rotation axis X. Thus, a distance d1 between a middle of the first central opening 2053 and the spline joint 37, measured parallel to the rotation axis X, is inferior to a length d2 of the spline joint 37 measured parallel to the rotation axis X between the front end 101 and the back end 103. Preferably, the distance d1 is inferior to half of the length d2. Thanks to the diminution of the distance d1 comparing to the length d2, the wear due to sliding motion of the first central opening 2053 relatively to the first cylindrical section 25 generated by torque load variation is reduced.

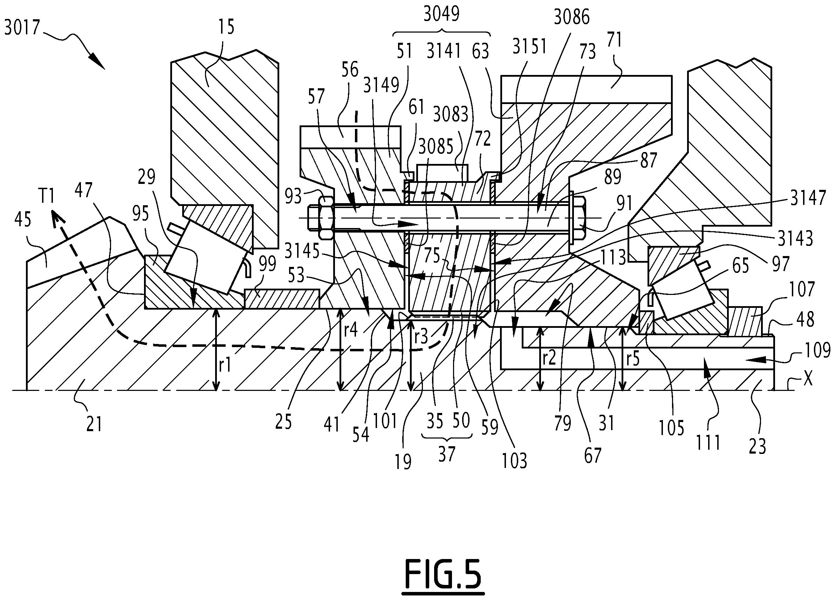

Figure 5 illustrates a shaft assembly 3017 according to a fourth embodiment of the invention, the shaft assembly 3017 being identical to the shaft assembly 17 of the first embodiment except for the features described below. The reference signs for the shaft assembly 3017 correspond to those of the shaft assembly 17 when the referenced element is unchanged. The reference signs are increased by 3000 when they designate similar but modified elements in the shaft assembly 3017. If a reference is mentioned in the remainder of the description without being shown on figure 5, or shown on figure 5 without being mentioned in the description, it relates to the element bearing the same reference in the first embodiment.

In this embodiment, the gear assembly 3049 comprises an added torque-transferring part 3141. The torque-transferring part 3141 comprises an opening 3143 circular and, when the gear assembly 3049 is mounted on the shaft 19, centered on the rotation axis X. The torque-transferring part 3141 comprises a front lateral surface 3145 perpendicular to the rotation axis X and oriented to the front end 21, when the gear assembly 3049 is mounted on the shaft 19, and a back lateral surface 3147 opposed to the front lateral surface 3145. The torque-transferring part 3141 comprises a third bore 3149 crossing through the torque-transferring part 3141 parallel to the rotation axis X. The third bore 3149 is configured to be coaxial to the first bore 57 and the second bore 73.

The second part 50 of the spline joint 37 is integral to the torque-transferring part 3141 and the peripheral teeth 3083 are positioned on the torque-transferring part 3141.

When the gear assembly 3049 is assembled, the torque-transferring part 3141 is interposed between the first gearwheel 51 and the second gearwheel 63 parallel to the rotation axis X. More precisely, the contact surface 59 is in abutment relative to the front lateral surface 3145 via a first friction enhancing shim 3085 and the second contact surface 75 is in abutment relative to the back lateral surface 3147 via a second friction enhancing shim 3086

The first radial guide 61 centres the torque-transferring part 3141 relatively to the first gearwheel 51, with a radial play between the first radial guide 61 and the torque-transferring part 3141. The torque-transferring part 3141 comprises a second radial guide 3151 extending from the back lateral surface 3147 parallel to the rotation axis X. The second radial guide 3151 centres the second gearwheel 63 relatively to the torque-transferring part 3141 with a radial play between the second radial guide 3151 and the second gearwheel 63.

The screw 89 cross through the first bore 57, the second bore 73 and the third bore 3149 and is screwed in to the nut 93, the first gearwheel 51, the second gearwheel 63 and the torque-transferring part 3141 being interposed between the screw head 91 and the nut 93 parallel to the rotation axis X. Thus, the first gearwheel 51, the second gearwheel 63 and the torque-transferring part 3141 are secured to each other and locked in relation to each other around the rotation axis X by the fastener 89. Besides, the screwing of the screw 89 in the nut 93 increases the pressure of the contact surface 57, the second contact surface 75, the front lateral surface 3145 and the back lateral surface 3147 against the first friction enhancing shims 3085 and the second friction enhancing shims 3086 so that the locking of the first gearwheel 51 relative to the torque-transferring part 3141 and the locking of the torque-transferring part 3141 relative to the second gearwheel 63 around the rotation axis X are improved. Thus, mechanical efforts applied on one of the gearwheel is transmitted entirely or essentially to the torque-transferring part 3141.

Thanks to the torque-transferring part 3141 the shear stress generated by the transmission of the torque load via the spline joint 37 is transferred to the torque-transferring part 3141.

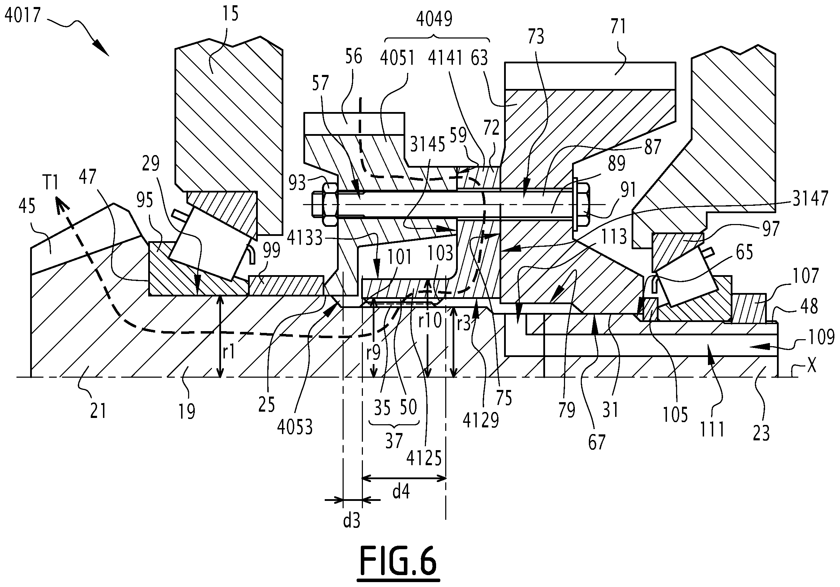

Figure 6 illustrates a shaft assembly 4017 according to a fifth embodiment of the invention, the shaft assembly 4017 being identical to the shaft assembly 3017 of the fourth embodiment except for the features described below. The reference signs for the shaft assembly 4017 correspond to those of the shaft assembly 3017 when the referenced element is unchanged. The reference signs are increased by 1000 when they designate similar but modified elements in the shaft assembly 3017. If a reference is mentioned in the remainder of the description without being shown on figure 6, or shown on figure 6 without being mentioned in the description, it relates to the element bearing the same reference in the fourth embodiment.

In the embodiment of figure 6, the torque-transferring part 4141 comprises an annular support 4125. The annular support 4125 extends coaxially to the rotation axis X from the front lateral surface 3145 in the direction of the front end 21. The annular support 4125 defines a minimal radius r9 measured perpendicularly to the rotation axis X between the rotation axis X and an inner surface 4129 of the annular support 4125 and a maximal radius r10 measured perpendicularly to the rotation axis X between the rotation axis X and an outer surface 4138 of the annular support 4125.

The second part 50 of the spline joint 37 is integral to the annular support 4125. The spline joint 37 is arranged between the front end 21 and the contact surface 59. More precisely, the back end 103 of the spline joint 37 is positioned between the front end 21 and the contact surface 59. Thus, the torque load T1 in the splines joint 37 is even more evenly distributed in axial direction relative to the spline joint 37. More precisely, there is no turning of the torque path over the splines joint 37. The distribution of the torque load T1 is improved.

Advantageously, the dimensions of the annular support 4125 are calculated so that a torsional stiffness of the second part 50 of the spline joint 37 is comprised between 0.8 and 1.2 times a torsional stiffness of the first part 35. Preferably, the torsional stiffness of the second part 50 is equal to the torsional stiffness of the first part 35 so that the distribution of the torque load through the spline joint 37 is improved. The torsional stiffness is calculated as the polar area moment of inertia. In other terms, the torsional stiffness of the first part 35 is equal to (πx2xr3⁴)/32 and the torsional stiffness of the second part 50 is equal to πx2(r10⁴-r9⁴)/32.

In this embodiment, the first central opening 4053 is reduced parallel to the rotation axis X. Thus, a distance d3 between a middle of the first central opening 4053 and the spline joint 37, measured parallel to the rotation axis X, is inferior to a length d4 of the spline joint 37 measured parallel to the rotation axis X between the front end 101 and the back end 103. Preferably, the distance d3 is inferior to half of the length d4. Thanks to the diminution of the distance d3 comparing to the length d4, the wear due to sliding motion of the first central opening 4053 relatively to the first cylindrical section 25 generated by torque load variation is reduced.

In a variant, not shown, the torque-transferring part 4141 is located towards the front end 21 relative to the first gearwheel 4051. In others terms, the first gearwheel 4051 is between torque-transferring part 4141 and the second gearwheel 63. The variant gives no torsion in the shaft 19 at the first cylindrical section 25.

According to another variant not shown, the shaft assembly includes only one single gearwheel.

**Example 1:** A shaft assembly 17; 1017; 2017; 3017; 4017 for a gearbox, the shaft assembly 17; 1017; 2017; 3017; 4017 including:
- a shaft 19, comprising a front end 21 and a back end 23 coaxial to a rotation axis X;
- a gear assembly 49; 1049; 2049; 3049; 4049, comprising a first gearwheel 51; 1051; 2051; 4051 and a second gearwheel 63; 2063 secured to each other so as to be locked in rotation relative to each other around the rotation axis X;
- a first cylindrical joint, comprising:
   ∘ a first cylindrical section 25, integral to the shaft 19 and coaxial to the rotation axis X, and
   ∘ a first central opening 53; 2053; 4053, integral to the first gearwheel 51; 1051; 2051; 4051, the first gearwheel 51; 1051; 2051; 4051 being mounted on the shaft 19 coaxially with the rotation axis X via the first central opening 53; 2053; 4053;
- a second cylindrical joint, comprising:
   ∘ a second cylindrical section 31, integral to the shaft 19 and coaxial to the rotation axis X, and
   ∘ a second central opening 65, the second gearwheel 63; 2063 being mounted on the shaft 19 coaxially with the rotation axis X via the second central opening 65, wherein the first gearwheel 51; 1051; 2051; 4051 is positioned between the front end 21 and the second gearwheel 63; 2063; and
- a spline joint 37, comprising:
   ∘ a first part 35, integral to the shaft 19 and coaxial to the rotation axis X, and
   ∘ a second part 50, integral to the gear assembly 49; 1049; 2049; 3049; 4049, engaged with the first part 35 so that both the first gearwheel 51; 1051; 2051; 4051 and the second gearwheel 63; 2063 of the gear assembly 49; 1049; 2049; 3049; 4049 are locked in rotation with the shaft 19 around the rotation axis X via the spline joint 37.

**Example 2:** The shaft assembly 17; 1017; 2017; 3017; 4017 of the previous example, wherein the gear assembly 49; 1049; 2049; 3049; 4049 comprises a fastener 87, extending parallel to the rotation axis X through the first gearwheel 51; 1051; 2051; 4051 and the second gearwheel 63, wherein the securing of the first gearwheel 51; 1051; 2051; 4051 and the second gearwheel 63 to each other is ensured by the fastener 87.

**Example 3:** The shaft assembly 17; 2017; 3017; 4017 of the example 2, wherein the fastener 87 includes a screw 89 with a screw head 91 and includes a nut 93, wherein the screw 89 is screwed into the nut 93, wherein the first gearwheel 51; 2051; 4051 and the second gearwheel 63 are interposed between the screw head 91 and the nut 93 parallel to the rotation axis X for ensuring said securing

**Example 4:** The shaft assembly 1017 of the example 2, wherein the fastener 87 includes a screw 1089, wherein one of the first gearwheel 1051 and the second gearwheel 63 includes an internal thread 1121, wherein the screw 1089 is screwed into the internal thread 1121 for ensuring said securing.

**Example 5:** The shaft assembly 17; 1017; 2017; 3017; 4017 of any one of the previous examples, wherein the shaft 19 comprises an inner lubricant duct 109, opening inside the gear assembly 49; 1049; 2049; 3049; 4049 for lubricating the spline joint 37

**Example 6:** The shaft assembly 17; 1017; 3017 of any one of the previous examples, wherein the gear assembly 49; 1049; 3049 comprises peripheral teeth 83; 3083 configured to enable a measurement of a rotation speed of the gear assembly 49; 1049; 3049 around the rotation axis X

**Example 7:** The shaft assembly 17; 1017; 3017 of any one of the previous examples, wherein:
- the shaft assembly 17; 1017; 3017 comprises an output gearwheel 45 fixedly mounted at the front end 21 of the shaft 19;
- the first gearwheel 51; 1051 comprises a contact surface 59 oriented towards the second gearwheel 63, wherein the first gearwheel 51; 1051 and the second gearwheel 63 are in abutment relative to each other along the rotation axis X; and
- the spline joint 37 is arranged between the back end 23 and the contact surface 59.

**Example 8:** The shaft assembly 2017; 4017 of any one of the examples 1 to 6, wherein:
- the shaft assembly 2017; 4017 comprises an output gearwheel 45 fixedly mounted at the front end 21 of the shaft 19;
- the first gearwheel 2051; 4051 comprises a contact surface 59 oriented towards the second gearwheel 63; 2063, wherein the first gearwheel 2051; 4051 and the second gearwheel 63; 2063 are in abutment relative to each other along the rotation axis X; and
- the spline joint 37 is arranged between the front end 21 and the contact surface 59

**Example 9:** The shaft assembly 2017; 4017 of any one of the previous examples, wherein a torsional stiffness of the second part 50 of the spline joint 37 is comprised between 0.8 and 1.2 times the torsional stiffness of the first part 35 of the spline joint 37.

**Example 10:** The shaft assembly 2017; 4017 of any one of the previous examples, wherein a distance d1 between the second central opening 65 and the spline joint 37, measured parallel to the rotation axis X, is inferior to a length d2 of the spline joint 37, measured parallel to the rotation axis X and preferably inferior to half of the length d2 of the spline joint 37.

**Example 11:** The shaft assembly 17; 1017; of any one of the previous examples, wherein the second part 50 of the spline joint 37 is integral with one of the first gearwheel 51; 1051; 2051 and the second gearwheel 63.

**Example 12:** The shaft assembly 17; 1017; 2017 of any one of the previous examples, wherein the gear assembly 49; 1049; 2049 comprises a friction enhancing shim 85 interposed between the second gearwheel 63; 2063 and the first gearwheel 51; 1051; 2051 for ensuring the locking in rotation of the first gearwheel 51; 1051; 2051 and the second gearwheel 63; 2063 relative to each other.

**Example 13:** The shaft assembly 3017; 4017 of any one of the examples 1 to 10, wherein the gear assembly 3049; 4049 comprises an added torque-transferring part 3141; 4141, interposed between the first gearwheel 51; 4051 and the second gearwheel 63 parallel to the rotation axis X and secured to the first gearwheel 51; 4051 and the second gearwheel 63 so as to be locked in rotation with the first gearwheel 51; 4051 and the second gearwheel 63 around the rotation axis X, the second part 50 of the spline joint 37 being integral to the torque-transferring part 3141; 4141.

**Example 14:** The shaft assembly 3017; 4017 of the example 13, wherein the gear assembly 3049; 4049 comprises friction enhancing shims 3085, 3086 interposed between the second gearwheel 63 and the torque-transferring part 3141; 4141 and/or between the torque-transferring part 3141; 4141 and the first gearwheel 51; 4051 for ensuring the locking in rotation of the first gearwheel 51; 4051, the second gearwheel 63 and the torque-transferring part 3141; 4141 relative to each other.

**Example 15:** The shaft assembly 3017 of any one of the examples 13 or 14 wherein the gear assembly 3049 comprises:
- a first radial guide 61 configured to centre the torque-transferring part 3141 relatively to the first gearwheel 51, with a radial play between the first radial guide 61 and the torque-transferring part 3 141, and
- a second radial guide 3051 configured to centre the second gearwheel 63 relatively to the torque-transferring part 3141 with a radial play between the second radial guide 3151 and the second gearwheel 63.

**Example 16:** The shaft assembly 17; 1017; 2017; 3017; 4017 of any one of the previous examples, wherein:
- the shaft 19 comprises a stop 47, arranged at the front end 21 and oriented towards the back end 23,
- the shaft 19 comprises an external thread 48 at the back end 23,
- the shaft assembly 17; 1017; 2017; 3017; 4017 comprises an abutment nut 107, screwed onto the external thread 48, and
- the gear assembly 49; 1049; 2049; 3049; 4049 is interposed between the stop 47 and the abutment nut 107, parallel to the rotation axis X.

**Example 17:** The shaft assembly 17; 1017; 2017; 3017; 4017 of the example 16 wherein:
- the shaft assembly 17; 1017; 2017; 3017; 4017 comprises a front bearing 95, configured to support a rotation of the shaft assembly 17; 1017; 2017; 3017; 4017 around the rotation axis X,
- the front bearing 95 is interposed between the stop 47 and the first gearwheel 51; 1051; 2051; 4051, parallel to the rotation axis X,
- the shaft assembly 17; 1017; 2017; 3017; 4017 comprises a back bearing 97, configured to support the rotation of the shaft assembly 17; 1017; 2017; 3017; 4017 around the rotation axis X, and
- the back bearing 97 is interposed between the second gearwheel 63; 2063 and the abutment nut 107, parallel to the rotation axis X

**Example 18:** A gearbox 13, comprising the shaft assembly 17; 1017; 2017; 3017; 4017 of any one of the previous examples and a housing, wherein the shaft assembly 17; 1017; 2017; 3017; 4017 is rotatable around the rotation axis X in relation to the housing 15.

**Example 19:** A vehicle 1 comprising the gearbox 13 according to the example 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A shaft assembly (17; 1017; 2017; 3017; 4017) for a gearbox, the shaft assembly (17; 1017; 2017; 3017; 4017) including:
- a shaft (19), comprising a front end (21) and a back end (23) coaxial to a rotation axis (X);
- a gear assembly (49; 1049; 2049; 3049; 4049), comprising a first gearwheel (51; 1051; 2051; 4051) and a second gearwheel (63; 2063) secured to each other so as to be locked in rotation relative to each other around the rotation axis (X);
- a first cylindrical joint, comprising:
∘ a first cylindrical section (25), integral to the shaft (19) and coaxial to the rotation axis (X), and
∘ a first central opening (53; 2053; 4053), integral to the first gearwheel (51; 1051; 2051; 4051), the first gearwheel (51; 1051; 2051; 4051) being mounted on the shaft (19) coaxially with the rotation axis (X) via the first central opening (53; 2053; 4053);
- a second cylindrical joint, comprising:
∘ a second cylindrical section (31), integral to the shaft (19) and coaxial to the rotation axis (X), and
∘ a second central opening (65), the second gearwheel (63; 2063) being mounted on the shaft (19) coaxially with the rotation axis (X) via the second central opening (65), wherein the first gearwheel (51; 1051; 2051; 4051) is positioned between the front end (21) and the second gearwheel (63; 2063); and
- a spline joint (37), comprising:
∘ a first part (35), integral to the shaft (19) and coaxial to the rotation axis (X), and
∘ a second part (50), integral to the gear assembly (49; 1049; 2049; 3049; 4049), engaged with the first part (35) so that both the first gearwheel (51; 1051; 2051; 4051) and the second gearwheel (63; 2063) of the gear assembly (49; 1049; 2049; 3049; 4049) are locked in rotation with the shaft (19) around the rotation axis (X) via the spline joint (37).

2. The shaft assembly (17; 1017; 2017; 3017; 4017) according to claim 1, wherein the gear assembly (49; 1049; 2049; 3049; 4049) comprises a fastener (87), extending parallel to the rotation axis (X) through the first gearwheel (51; 1051; 2051; 4051) and the second gearwheel (63; 2063), wherein the securing of the first gearwheel (51; 1051; 2051; 4051) and the second gearwheel (63; 2063) to each other is ensured by the fastener (87).

3. The shaft assembly (17; 2017; 3017; 4017) according to claim 2, wherein the fastener (87) includes a screw (89) with a screw head (91) and includes a nut (93), wherein the screw (89) is screwed into the nut (93), wherein the first gearwheel (51; 2051; 4051) and the second gearwheel (63; 2063) are interposed between the screw head (91) and the nut (93) parallel to the rotation axis (X) for ensuring said securing.

4. The shaft assembly (1017) according to claim 2, wherein the fastener (87) includes a screw (1089), wherein one of the first gearwheel (1051) and the second gearwheel (63) includes an internal thread (1121), wherein the screw (1089) is screwed into the internal thread (1121) for ensuring said securing.

5. The shaft assembly (17; 1017; 2017; 3017; 4017) according to any one of the previous claims, wherein the shaft (19) comprises an inner lubricant duct (109), opening inside the gear assembly (49; 1049; 2049; 3049; 4049) for lubricating the spline joint (37).

6. The shaft assembly (17; 1017; 3017) according to any one of the previous claims, wherein the gear assembly (49; 1049; 3049) comprises peripheral teeth (83; 3083) configured to enable a measurement of a rotation speed of the gear assembly (49; 1049; 3049) around the rotation axis (X).

7. The shaft assembly (2017; 4017) according to any one of the previous claims, wherein a torsional stiffness of the second part (50) of the spline joint (37) is comprised between 0.8 and 1.2 times the torsional stiffness of the first part (35) of the spline joint (37).

8. The shaft assembly (2017; 4017) according to any one of the previous claims, wherein a distance (d1) between the second central opening (65) and the spline joint (37), measured parallel to the rotation axis (X), is inferior to a length (d2) of the spline joint (37), measured parallel to the rotation axis (X) and preferably inferior to half of the length (d2) of the spline joint (37).

9. The shaft assembly (17; 1017; 2017) according to any one of the previous claims, wherein the second part (50) of the spline joint (37) is integral with one of the first gearwheel (51; 1051; 2051) and the second gearwheel (63; 2063).

10. The shaft assembly (17; 1017; 2017) according to any one of the previous claims, wherein the gear assembly (49; 1049; 2049) comprises a friction enhancing shim (85) interposed between the second gearwheel (63; 2063) and the first gearwheel (51; 1051; 2051) for ensuring the locking in rotation of the first gearwheel (51; 1051; 2051) and the second gearwheel (63; 2063) relative to each other.

11. The shaft assembly (3017; 4017) according to any one of the claims 1 to 8, wherein the gear assembly (3049; 4049) comprises an added torque-transferring part (3141; 4141), interposed between the first gearwheel (51; 4051) and the second gearwheel (63) parallel to the rotation axis (X) and secured to the first gearwheel (51; 4051) and the second gearwheel (63) so as to be locked in rotation with the first gearwheel (51; 4051) and the second gearwheel (63) around the rotation axis (X), the second part (50) of the spline joint (37) being integral to the torque-transferring part (3141; 4141).

12. The shaft assembly (3017; 4017) according to claim 11, wherein the gear assembly (3049; 4049) comprises friction enhancing shims (3085, 3086) interposed between the second gearwheel (63) and the torque-transferring part (3141; 4141) and/or between the torque-transferring part (3141; 4141) and the first gearwheel (51; 4051) for ensuring the locking in rotation of the first gearwheel (51; 4051), the second gearwheel (63) and the torque-transferring part (3141; 4141) relative to each other.

13. The shaft assembly (3017) according to any one of the claims 11 or 12 wherein the gear assembly (3049) comprises:
- a first radial guide (61), for centring the torque-transferring part (3141) relatively to the first gearwheel (51), with a radial play between the first radial guide (61) and the torque-transferring part (3141), and
- a second radial guide (3051), for centring the second gearwheel (63) relatively to the torque-transferring part (3141) with a radial play between the second radial guide (3151) and the second gearwheel (63).

14. A gearbox (13), comprising the shaft assembly (17; 1017; 2017; 3017; 4017) according to any one of the previous claims and a housing, wherein the shaft assembly (17; 1017; 2017; 3017; 4017) is rotatable around the rotation axis (X) in relation to the housing (15).

15. A vehicle (1) comprising the gearbox (13) according to claim 14.

## Amended claims

### Amended claims in accordance with Rule 137(2) EPC.

1. A shaft assembly (17; 1017; 2017; 3017; 4017) for a gearbox, the shaft assembly (17; 1017; 2017; 3017; 4017) including:
- a shaft (19), comprising a front end (21) and a back end (23) coaxial to a rotation axis (X);
- a gear assembly (49; 1049; 2049; 3049; 4049), comprising a first gearwheel (51; 1051; 2051; 4051) and a second gearwheel (63; 2063) secured to each other so as to be locked in rotation relative to each other around the rotation axis (X);
- a first cylindrical joint, comprising:
∘ a first cylindrical section (25), integral to the shaft (19) and coaxial to the rotation axis (X), and
∘ a first central opening (53; 2053; 4053), integral to the first gearwheel (51; 1051; 2051; 4051), the first gearwheel (51; 1051; 2051; 4051) being mounted on the shaft (19) coaxially with the rotation axis (X) via the first central opening (53; 2053; 4053);
- a second cylindrical joint, comprising:
∘ a second cylindrical section (31), integral to the shaft (19) and coaxial to the rotation axis (X), and
∘ a second central opening (65), the second gearwheel (63; 2063) being mounted on the shaft (19) coaxially with the rotation axis (X) via the second central opening (65), wherein the first gearwheel (51; 1051; 2051; 4051) is positioned between the front end (21) and the second gearwheel (63; 2063); and
- a spline joint (37), comprising:
∘ a first part (35), integral to the shaft (19) and coaxial to the rotation axis (X), and
∘ a second part (50), integral to the gear assembly (49; 1049; 2049; 3049; 4049), engaged with the first part (35) so that both the first gearwheel (51; 1051; 2051; 4051) and the second gearwheel (63; 2063) of the gear assembly (49; 1049; 2049; 3049; 4049) are locked in rotation with the shaft (19) around the rotation axis (X) via the spline joint (37),
wherein the spline joint (37) is the only one spline joint (37) comprised by the shaft assembly (17; 1017; 2017; 3017; 4017).

2. The shaft assembly (17; 1017; 2017; 3017; 4017) according to claim 1, wherein the gear assembly (49; 1049; 2049; 3049; 4049) comprises a fastener (87), extending parallel to the rotation axis (X) through the first gearwheel (51; 1051; 2051; 4051) and the second gearwheel (63; 2063), wherein the securing of the first gearwheel (51; 1051; 2051; 4051) and the second gearwheel (63; 2063) to each other is ensured by the fastener (87).

3. The shaft assembly (17; 2017; 3017; 4017) according to claim 2, wherein the fastener (87) includes a screw (89) with a screw head (91) and includes a nut (93), wherein the screw (89) is screwed into the nut (93), wherein the first gearwheel (51; 2051; 4051) and the second gearwheel (63; 2063) are interposed between the screw head (91) and the nut (93) parallel to the rotation axis (X) for ensuring said securing.

4. The shaft assembly (1017) according to claim 2, wherein the fastener (87) includes a screw (1089), wherein one of the first gearwheel (1051) and the second gearwheel (63) includes an internal thread (1121), wherein the screw (1089) is screwed into the internal thread (1121) for ensuring said securing.

5. The shaft assembly (17; 1017; 2017; 3017; 4017) according to any one of the previous claims, wherein the shaft (19) comprises an inner lubricant duct (109), opening inside the gear assembly (49; 1049; 2049; 3049; 4049) for lubricating the spline joint (37).

6. The shaft assembly (17; 1017; 3017) according to any one of the previous claims, wherein the gear assembly (49; 1049; 3049) comprises peripheral teeth (83; 3083) configured to enable a measurement of a rotation speed of the gear assembly (49; 1049; 3049) around the rotation axis (X).

7. The shaft assembly (2017; 4017) according to any one of the previous claims, wherein a torsional stiffness of the second part (50) of the spline joint (37) is comprised between 0.8 and 1.2 times the torsional stiffness of the first part (35) of the spline joint (37).

8. The shaft assembly (2017; 4017) according to any one of the previous claims, wherein a distance (d1) between the second central opening (65) and the spline joint (37), measured parallel to the rotation axis (X), is inferior to a length (d2) of the spline joint (37), measured parallel to the rotation axis (X) and preferably inferior to half of the length (d2) of the spline joint (37).

9. The shaft assembly (17; 1017; 2017) according to any one of the previous claims, wherein the second part (50) of the spline joint (37) is integral with one of the first gearwheel (51; 1051; 2051) and the second gearwheel (63; 2063).

10. The shaft assembly (17; 1017; 2017) according to any one of the previous claims, wherein the gear assembly (49; 1049; 2049) comprises a friction enhancing shim (85) interposed between the second gearwheel (63; 2063) and the first gearwheel (51; 1051; 2051) for ensuring the locking in rotation of the first gearwheel (51; 1051; 2051) and the second gearwheel (63; 2063) relative to each other.

11. The shaft assembly (3017; 4017) according to any one of the claims 1 to 8, wherein the gear assembly (3049; 4049) comprises an added torque-transferring part (3141; 4141), interposed between the first gearwheel (51; 4051) and the second gearwheel (63) parallel to the rotation axis (X) and secured to the first gearwheel (51; 4051) and the second gearwheel (63) so as to be locked in rotation with the first gearwheel (51; 4051) and the second gearwheel (63) around the rotation axis (X), the second part (50) of the spline joint (37) being integral to the torque-transferring part (3141; 4141).

12. The shaft assembly (3017; 4017) according to claim 11, wherein the gear assembly (3049; 4049) comprises friction enhancing shims (3085, 3086) interposed between the second gearwheel (63) and the torque-transferring part (3141; 4141) and/or between the torque-transferring part (3141; 4141) and the first gearwheel (51; 4051) for ensuring the locking in rotation of the first gearwheel (51; 4051), the second gearwheel (63) and the torque-transferring part (3141; 4141) relative to each other.

13. The shaft assembly (3017) according to any one of the claims 11 or 12 wherein the gear assembly (3049) comprises:
- a first radial guide (61), for centring the torque-transferring part (3141) relatively to the first gearwheel (51), with a radial play between the first radial guide (61) and the torque-transferring part (3141), and
- a second radial guide (3051), for centring the second gearwheel (63) relatively to the torque-transferring part (3141) with a radial play between the second radial guide (3151) and the second gearwheel (63).

14. A gearbox (13), comprising the shaft assembly (17; 1017; 2017; 3017; 4017) according to any one of the previous claims and a housing, wherein the shaft assembly (17; 1017; 2017; 3017; 4017) is rotatable around the rotation axis (X) in relation to the housing (15).

15. A vehicle (1) comprising the gearbox (13) according to claim 14.
